# EUROPEAN PATENT APPLICATION

(11) **EP 4 671 330 A1**
(43) Date of publication of application: **31.12.2025**
(21) Application number: 24185362.1
(22) Date of filing: 28.06.2024
(51) Int. Cl.: C09C 1/48, C10B 53/07, B29B 17/04

(54) **HIGH-VALUE RECOVERED CARBON BLACK BY PYROLYSIS OF SELECTED RUBBER PARTS**

(71) Applicant: BASF SE, 67056 Ludwigshafen am Rhein (DE)
(72) Inventor: Hanneman, Stefan, 67056 Ludwigshafen am Rhein (DE); Franck, Miika, 67056 Ludwigshafen am Rhein (DE); Birenheide, Bernhard Sebastian, 67056 Ludwigshafen am Rhein (DE); Friehmelt, Rainer, 67056 Ludwigshafen am Rhein (DE); Hoelemann, Karl, 67056 Ludwigshafen am Rhein (DE)
(74) Representative: Altmann Stößel Dick Patentanwälte PartG mbB

(57) **Abstract**

A process for working up an end-of-life tire, wherein the end-of-life tire comprises a tread section S mounted on a tire carcass C, wherein the tread section S comprises a rubber material R₁ comprising carbon black and the tire carcass C comprises at least one rubber material R₂ comprising carbon black, the process comprising (1) providing the end-of-life tire; (2) subjecting the end-of-life tire to a tread section removal method, obtaining a removed tread section material M_{S} and a tire carcass material M_{C}, the tire carcass material M_{C} optionally comprising a residual amount of the tread section S; (3) subjecting at least a part of the tire carcass material M_{C} to pyrolysis conditions, obtaining a liquid pyrolysis oil fraction F_{P} and a solid recovered carbon black fraction F_{CB}.

## Description

The present invention relates to a process for working up an end-of-life tire. The present invention further relates to recovered carbon black obtainable or obtained by said process, the use of said recovered carbon black for preparing a rubber material and a method for preparing a rubber material from said recovered carbon black. The present invention still further relates to a process for the chemical recycling of an end-of-life tire.

Processes for refurbishing end-of-life tires have been developed in the past to remove the tread from the carcass. However, these processes aimed at retreading the carcass with new tread, leaving the old tread in form of buffing dust with poor quality. Therefore, there is a need to provide improved and sustainable processes for working up end-of-life tires.

Thus, it was an object of the present invention to provide a new process combination in the field of end-of-life tires for working up an end-of-life tire, which is more efficient and cost-effective compared to existing ones. Further, it was an object of the present invention to increase the quality of recovered carbon black which can be reintroduced into the production process of rubber-based materials, like tires, for improving sustainability of the value chain and enabling a circular economy.

Therefore, the present invention relates to a process for working up an end-of-life tire, wherein the end-of-life tire comprises a tread section S mounted on a tire carcass C, wherein the tread section S comprises a rubber material R₁ comprising carbon black and the tire carcass C comprises at least one rubber material R₂ comprising carbon black, wherein the process comprises
(1) providing the end-of-life tire;
(2) subjecting the end-of-life tire to a tread section removal method, obtaining a removed tread section material M_{S} and a tire carcass material M_{C}, the tire carcass material M_{C} optionally comprising a residual amount of the tread section S;
(3) subjecting at least a part of the tire carcass material M_{C} to pyrolysis conditions, obtaining a liquid pyrolysis oil fraction F_{P} and a solid recovered carbon black fraction F_{CB}.

According to (2), the end-of-life tire provided according to (1) is subjected to a tread section removal method. No restrictions exist how said tread section removal method is carried out. It is preferred that the tread section removal method according to (2) comprises one or more of cutting and buffing, more preferably buffing.

Preferably, the weight ratio of the tread section material M_{S} obtained according to (2) relative to the weight of the tread section S is in the range of from 0.8:1 to 1:1, more preferably in the range of from 0.9:1 to 1:1, more preferably in the range of from 0.95:1 to 1:1. Ranges of from 0.96:1 to 1:1 or from 0.97:1 to 1:1 or from 0.98:1 to 1:1 or from 0.99:1 to 1:1 are conceivable.

Regarding the composition of the tread section S, it is preferred that from 75 to 100 weight-%, more preferably from 80 to 100 weight-%, more preferably from 85 to 100 weight-% of the tread section S consist of the rubber material R₁. Yet more preferably, from 95 to 100 weight-%, more preferably from 97 to 100 weight-%, more preferably from 98 to 100 weight-%, more preferably from 99 to 100 weight-% of the tread section S consist of the rubber material R₁.

Regarding the composition of the rubber material R₁, it is preferred that the rubber material R₁ comprises silica. Further, the tire carcass C optionally comprises silica. Preferably, the weight ratio of Si comprised in the tire carcass material M_{C}, calculated as SiO₂, relative to Si comprised in the tread section material M_{S}, calculated as SiO₂, is in the range of from 0:1 to 0.1:1, more preferably in the range of from 0:1 to 0.05:1, more preferably in the range of from 0:1 to 0.01:1.

According to (3), at least a part of the tire carcass material M_{C} is subjected to pyrolysis conditions. No restrictions exist how said pyrolysis is carried out. It is preferred that the tire carcass material M_{C} comprises the at least one rubber material R₂, textile fibers and steel, and that subjecting according to (3) comprises
(3.1) subjecting the tire carcass material M_{C} to comminution, obtaining a mixture M_{CC} comprising comminuted tire carcass material M_{C} comprising rubber, textile fibers and steel;
(3.2) subjecting the mixture M_{CC} to a separation method, obtaining a rubber mixture M_{CCR}, a textile fiber mixture M_{CCT} and a steel mixture M_{CCS};
(3.3) subjecting the mixture M_{CCR} to pyrolysis conditions, obtaining a pyrolysis oil and recovered carbon black.

According to (3.1), the tire carcass material M_{C} obtained according to (2) is subjected to comminution. No particular restrictions exist how said comminution is carried out. It is preferred that comminution according to (3.1) comprises one or more of cutting and shredding, more preferably shredding.

According to (3.2), the mixture M_{CC} obtained according to (3.1) is subjected to a separation method. No particular restriction exists how said separation is carried out. It is preferred that the separation method according to (3.2) comprises
(3.2.1) subjecting the mixture M_{CC} to a first separation step, obtaining the steel mixture M_{CCS} and a rubber and textile fiber mixture M_{CCTR};
(3.2.2) subjecting the mixture M_{CCTR} to a second separation step, obtaining the rubber mixture M_{CCR} and the textile fiber mixture M_{CCT}.

Regarding the first separation step according to (3.2.1), it is preferred that it comprises one or more steps of shredding and magnetic separation. Regarding the second separation step according to (3.2.2), it is preferred that it comprises one or more of shredding and sieving, more preferably sieving.

With regard to the composition of the rubber mixture M_{CCR}, it is preferred that from 90 to 100 weight-%, more preferably from 95 to 100 weight-%, more preferably from 98 to 100 weight-% of the rubber mixture M_{CCR} consist of rubber. Further regarding the composition of the rubber mixture M_{CCR}, it is preferred that the Si content of the rubber mixture M_{CCR} is in the range of from 0 to 25 weight-%, more preferably in the range of from 0 to 15 weight-%, more preferably in the range of from 0 to 8 weight-%, calculated as SiO₂ and based on the total weight of the mixture M_{CCR}.

Regarding the pyrolysis conditions according to (3), it is preferred that they comprise a pyrolysis temperature T_{P} in the range of from 300 to 900 °C, more preferably in the range of from 350 to 800°C, more preferably in the range of from 400 to 700 °C. Respective ranges of from 400 to 500 °C, from 500 to 600 °C, and from 600 to 700 °C are conceivable. Further regarding the pyrolysis conditions according to (3), it is preferred that they comprise a pyrolysis pressure p_{P} in the range of from 0.1 to 5 bar, preferably in the range of from 0.2 to 4 bar, more preferably in the range of from 0.5 to 3 bar. Respective ranges of from 0.5 to 1 bar, from 1 to 2 bar and from 2 to 3 bar are conceivable. Yet further regarding the pyrolysis conditions according to (3), it is preferred that they comprise an inert pyrolysis gas atmosphere, wherein preferably from 99.5 to 100 volume-%, more preferably from 99.8 to 100 volume-%, more preferably from 99.9 to 100 volume-% of said inert pyrolysis gas atmosphere consist of one or more of nitrogen and argon, preferably nitrogen. Still more preferably, the inert pyrolysis gas atmosphere comprises from 0 to 0.5 volume-%, more preferably from 0 to 0.2 volume-%, more preferably from 0 to 0.1 volume-% oxygen. Preferably, said inert atmosphere is present at the beginning of the pyrolysis, and in the course of the pyrolysis, the atmosphere will contain one or more condensable and/or non-condensable gases.

Regarding said end-of-life tire provided according to (1), it is preferred that it is at least one of a car tire, a motorcycle tire, a bicycle tire, a truck tire, a bus tire, a tractor tire, a mining machine tire and an aircraft tire, wherein the end-of-life tire is more preferably a passenger car tire.

Preferably according to the present invention, the process further comprises one or more post-treatment steps directed to the purification of the recovered carbon black fraction F_{CB}. In this regard, it is preferred that the process further comprises
(4) subjecting the solid recovered carbon black fraction F_{CB} obtained according to (3) to purification.

According to (4), solid recovered carbon black fraction F_{CB} obtained according to 3) is subjected to purification. No restrictions exist on how said purification is carried out. Preferably, said purification according to (4) comprises at least one chemical purification step. More preferably, the at least one chemical purification step comprises at least one alkaline leaching step according to which the solid recovered carbon black fraction F_{CB} is contact with one or more alkaline compounds, optionally in the presence of an oxidant.

Further, said purification may preferably comprise the separation of residual amounts of pyrolysis oil, said separation preferably comprising an extraction of said pyrolysis oil, more preferably using one or more of toluene and hexane. Said extraction is preferably carried out at a temperature in the range of from 15 to 50 °C, more preferably in the range of from 20 to 40 °C.

Therefore, it is preferred that subjecting according to (4) comprises
(4.1) providing at least one alkaline mixture M_{A} comprising one or more of at least one alkali metal hydroxides, ammonia, at least one ammonium salt, at least one amine, and at least one amine salt;
(4.2) optionally providing a mixture M_{O} comprising at least one oxidant;
(4.3) contacting the solid recovered carbon black fraction F_{CB} with the mixture M_{A}, said contacting optionally comprising adding the mixture M_{O}, obtaining from said contacting a mixture M_{CB} comprising recovered carbon black;
(4.4) separating the recovered carbon black from the mixture M_{CB}, obtaining a purified solid recovered carbon black fraction F_{CBP} being depleted, compared to the solid recovered carbon black fraction F_{CB}, in one or more of a mineral and/or a salt, more preferably one or more of a metal sulphide, a metal oxide and a silicate.

With regard to the mixture M_{A}, it is preferred that the at least one alkali metal hydroxide comprises at least one of LiOH, NaOH and KOH, more preferably at least one of NaOH and KOH. The mixture M_{A} may be in the form of an aqueous solution. Further with regard to mixture M_{A}, it is preferred that the at least one ammonium salt is at least one of ammonium hydroxide, ammonium bromide, and ammonium chloride. Preferably, the aqueous solution has a pH of at least 11.

With regard to the mixture M_{O}, the at least oxidant preferably comprises hydrogen peroxide. The mixture M_{O} may be in the form of an aqueous solution.

According to (4.3), the solid recovered carbon black fraction F_{CB} is contacted with the mixture M_{A}. It is preferred that during contacting according to (4.3) the temperature T_{CP} is in the range of from 25 to 300 °C, more preferably in the range of from 80 to 240 °C. Ranges of from 80 to 120 °C or from 120 to 160 °C or from 160 to 200 °C or from 200 to 240 °C are conceivable.

Further, it is preferred that contacting according to (4.3) is carried out at a pressure p_{CP} in the range of from 0.01 to 200 bar, more preferably in the range of from 1 to 100 bar, more preferably in the range of from 5 to 50 bar. Respective ranges of from 5 to 20 bar or from 20 to 30 bar or from 30 to 40 bar or from 40 to 50 bar are conceivable.

Optionally, the sequence of steps (4.3) and (4.4) can be repeated at least once, wherein in case of a repetition of step (4.3), the recovered carbon black fraction F_{CBP} is contacted with the mixture M_{A}, said contacting optionally comprising adding the mixture M_{O}. When repeating the sequence of steps (4.3) and (4.4), the mixture M_{A} used for said repeated sequence can be the same as or different from the mixture M_{A} used in the previous sequence. Further, when repeating the sequence of steps (4.3) and (4.4), the temperature and pressure according to (4.3) can be the same as or different from the temperature and pressure used in the previous sequence.

Additionally or alternatively, it is preferred that subjecting according to (4) comprises
(4.1') providing a mixture M_{S} comprising at least one acid;
(4.2') contacting the solid recovered carbon black fraction F_{CB} with the mixture Mₛ, obtaining a mixture M_{CB} comprising recovered carbon black;
(4.3') separating the recovered carbon black from the mixture M_{CB}, obtaining a purified solid recovered carbon black fraction F_{CBP} being depleted, compared to the solid recovered carbon black fraction F_{CB}, in one or more of a mineral and/or a salt, preferably one or more of a zinc salt.

With regard to mixture M_{S}, it is preferred that the at least one acid is one or more of hydrochloric acid, sulphuric acid, phosphoric acid, nitric acid, boric acid, perchloric acid, acetic acid, citric acid, and formic acid.

Optionally, the sequence of steps (4.2') and (4.3') can be repeated at least once, wherein in case of a repetition of step (4.2'), the recovered carbon black fraction F_{CBP} is contacted with the mixture M_{S}. When repeating the sequence of steps (4.2') and (4.3'), the mixture M_{S} used for said repeated sequence can be the same as or different from the mixture M_{S} used in the previous sequence.

According to the present, it may be advantageous to start with a alkaline purification preferably comprising the steps (4.1) to (4.4) as described above, and then continue with a second acidic purification preferably comprising steps (4.1') to (4.3') as described above.

Preferably according to the present invention, the process further comprises one or more post-processing steps directed to the compaction of the solid recovered carbon black fraction F_{CB}. In this regard, it is preferred that the process further comprises pelletizing the solid recovered carbon black fraction F_{CB} obtained according to (3) and/or the purified solid recovered carbon black fraction F_{CBP} obtained according to (4.4).

According to said pelletizing, solid recovered carbon black fraction F_{CB} obtained according to (3) or, in case step (4) is carried out, obtained according to (4), preferably according to (4.4) or (4.3'), is subjected to pelletizing. No particular restrictions exist how said pelletizing is carried out. It is preferred that said pelletizing comprises
- subjecting the solid recovered carbon black fraction F_{CB} and/or the purified solid recovered carbon black fraction F_{CBP} to comminution, obtaining a mixture M_{CCB} comprising comminuted recovered carbon black;
- mixing the mixture M_{CCB} with a binder, obtaining a mixture M_{CCBB} comprising comminuted recovered carbon black and a binder;
- pelletizing the mixture M_{CCBB}, obtaining pellets comprising recovered carbon black and a binder.

Regarding the comminution according to (i.2), it is preferred that it comprises milling, more preferably one or more of ball milling and jet milling, more preferably jet milling.

Preferably, the binder used according to (i.2) is one or more of polyvinyl alcohol, carboxymethyl cellulose, wax-based binders, paraffin-based binders, phenol resin and epoxy resin.

Still further, the present invention also relates to recovered carbon black which is obtainable or obtained by a process according to the present invention. In this respect, it is preferred that said recovered carbon black is obtainable or obtained by a process comprising
(1) providing the end-of-life tire;
(2) subjecting the end-of-life tire to a tread section removal method, obtaining a removed tread section material M_{S} and a tire carcass material M_{C}, the tire carcass material M_{C} optionally comprising a residual amount of the tread section S;
(3) subjecting at least a part of the tire carcass material M_{C} to pyrolysis conditions, obtaining a liquid pyrolysis oil fraction F_{P} and a solid recovered carbon black fraction F_{CB}, said subjecting preferably comprising
   (3.1) subjecting the tire carcass material M_{C} to comminution, obtaining a mixture M_{CC} comprising comminuted tire carcass material M_{C} comprising rubber, textile fibers and steel;
   (3.2) subjecting the mixture M_{CC} to a separation method, obtaining a rubber mixture M_{CCR}, a textile fiber mixture M_{CCT} and a steel mixture M_{CCS}, said separation method preferably comprising
      (3.2.1) subjecting the mixture M_{CC} to a first separation step, obtaining the steel mixture M_{CCS} and a rubber and textile fiber mixture M_{CCTR};
      (3.2.2) subjecting the mixture M_{CCTR} to a second separation step, obtaining the rubber mixture M_{CCR} and the textile fiber mixture M_{CCT};
   (3.3) subjecting the mixture M_{CCR} to pyrolysis conditions, obtaining a pyrolysis oil and recovered carbon black;
(4) subjecting the solid recovered carbon black fraction F_{CB} obtained according to (3) to purification, wherein the purification preferably comprises at least one chemical purification step, said purification preferably comprising
   (4.1) providing at least one alkaline mixture M_{A} comprising one or more of at least one alkali metal hydroxides, ammonia, at least one ammonium salt, at least one amine, and at least one amine salt;
   (4.2) optionally providing a mixture M_{O} comprising at least one oxidant;
   (4.3) contacting the solid recovered carbon black fraction F_{CB} with the mixture M_{A}, said contacting optionally comprising adding the mixture M_{O}, obtaining from said contacting a mixture M_{CB} comprising recovered carbon black;
   (4.4) separating the recovered carbon black from the mixture M_{CB}, obtaining a purified solid recovered carbon black fraction F_{CBP} being depleted, compared to the solid recovered carbon black fraction F_{CB}, in one or more of a mineral and/or a salt, more preferably one or more of a metal sulphide, a metal oxide and a silicate;
      and/or
   (4.1') providing a mixture M_{S} comprising at least one acid;
   (4.2') contacting the solid recovered carbon black fraction F_{CB} with the mixture Mₛ, obtaining a mixture M_{CB} comprising recovered carbon black;
   (4.3') separating the recovered carbon black from the mixture M_{CB}, obtaining a purified solid recovered carbon black fraction F_{CBP} being depleted, compared to the solid recovered carbon black fraction F_{CB}, in one or more of a mineral and/or a salt, preferably one or more of a zinc salt.

Preferably, the recovered carbon black exhibits a BET specific surface area in the range of from 20 to 80 m²/g, more preferably in the range of from 50 to 75 m²/g, more preferably in the range of from 55 to 75 m²/g, more preferably in the range of from 55 to 70 m²/g, wherein the BET specific surface area is determined as described in Reference Example 1.

Preferably, the recovered carbon black is characterized by a 325 mesh residue is in the range of from 150 to 450 ppm, more preferably in the range of from 200 to 400 ppm, more preferably in the range of from 250 to 350 ppm, wherein the 325 mesh residue is determined as described in Reference Example 2.

Preferably, the recovered carbon black is characterized by a 35 mesh residue is in the range of from 0.1 to 30 ppm, more preferably in the range of from 1 to 20 ppm, more preferably in the range of from 5 to 15 ppm, wherein the 35 mesh residue is determined as described in Reference Example 2.

Therefore, the recovered carbon black obtainable or obtained by the process as described herein preferably exhibits a BET specific surface area in the range of from 20 to 80 m²/g, a 325 mesh residue is in the range of from 150 to 450 ppm and a 35 mesh residue is in the range of from 0.1 to 30 ppm, more preferably a BET specific surface area in the range of from 50 to 75 m²/g, a 325 mesh residue is in the range of from 200 to 400 ppm and a 35 mesh residue in the range of from 1 to 20 ppm, more preferably a BET specific surface area in the range of from 55 to 70 m²/g, a 325 mesh residue is in the range of from 250 to 350 ppm, and a 35 mesh residue in the range of from 5 to 15 ppm.

Still further, the present invention relates to recovered carbon black, exhibiting a BET specific surface area in the range of from 20 to 80 m²/g, a 325 mesh residue in the range of from 150 to 450 ppm and a 35 mesh residue in the range of from 0.1 to 30 ppm, preferably a BET specific surface area in the range of from 50 to 75 m²/g, a 325 mesh residue in the range of from 200 to 400 ppm and a 35 mesh residue in the range of from 1 to 20 ppm, more preferably a BET specific surface area in the range of from 55 to 70 m²/g, a 325 mesh residue in the range of from 250 to 350 ppm, and a 35 mesh residue in the range of from 5 to 15 ppm, wherein said recovered black is preferably obtainable or obtained by a process as described herein, more preferably by a process comprising
(1) providing the end-of-life tire;
(2) subjecting the end-of-life tire to a tread section removal method, obtaining a removed tread section material M_{S} and a tire carcass material M_{C}, the tire carcass material M_{C} optionally comprising a residual amount of the tread section S;
(3) subjecting at least a part of the tire carcass material M_{C} to pyrolysis conditions, obtaining a liquid pyrolysis oil fraction F_{P} and a solid recovered carbon black fraction F_{CB}, said subjecting preferably comprising
   (3.1) subjecting the tire carcass material M_{C} to comminution, obtaining a mixture M_{CC} comprising comminuted tire carcass material M_{C} comprising rubber, textile fibers and steel;
   (3.2) subjecting the mixture M_{CC} to a separation method, obtaining a rubber mixture M_{CCR}, a textile fiber mixture M_{CCT} and a steel mixture M_{CCS}, said separation method preferably comprising
      (3.2.1) subjecting the mixture M_{CC} to a first separation step, obtaining the steel mixture M_{CCS} and a rubber and textile fiber mixture M_{CCTR};
      (3.2.2) subjecting the mixture M_{CCTR} to a second separation step, obtaining the rubber mixture M_{CCR} and the textile fiber mixture M_{CCT};
   (3.3) subjecting the mixture M_{CCR} to pyrolysis conditions, obtaining a pyrolysis oil and recovered carbon black;
(4) subjecting the solid recovered carbon black fraction F_{CB} obtained according to (3) to purification, wherein the purification preferably comprises at least one chemical purification step, said purification preferably comprising
   (4.1) providing at least one alkaline mixture M_{A} comprising one or more of at least one alkali metal hydroxides, ammonia, at least one ammonium salt, at least one amine, and at least one amine salt;
   (4.2) optionally providing a mixture M_{O} comprising at least one oxidant;
   (4.3) contacting the solid recovered carbon black fraction F_{CB} with the mixture M_{A}, said contacting optionally comprising adding the mixture M_{O}, obtaining from said contacting a mixture M_{CB} comprising recovered carbon black;
   (4.4) separating the recovered carbon black from the mixture M_{CB}, obtaining a purified solid recovered carbon black fraction F_{CBP} being depleted, compared to the solid recovered carbon black fraction F_{CB}, in one or more of a mineral and/or a salt, more preferably one or more of a metal sulphide, a metal oxide and a silicate;
      and/or
   (4.1') providing a mixture M_{S} comprising at least one acid;
   (4.2') contacting the solid recovered carbon black fraction F_{CB} with the mixture Mₛ, obtaining a mixture M_{CB} comprising recovered carbon black;
   (4.3') separating the recovered carbon black from the mixture M_{CB}, obtaining a purified solid recovered carbon black fraction F_{CBP} being depleted, compared to the solid recovered carbon black fraction F_{CB}, in one or more of a mineral and/or a salt, preferably one or more of a zinc salt.

Still further, the present invention also relates to the use of the recovered carbon black, obtainable or obtained according to a process as described herein, preferably the recovered carbon black as described herein exhibiting the above-described values of the BET specific surface area, 325 mesh size and 35 mesh size, for preparing a rubber material, preferably a rubber material for use as a component of a tire. Further, the present invention relates to a method for preparing a rubber material, preferably a rubber material for use as a component of a tire, wherein said method comprises using the recovered carbon black, obtainable or obtained according to a process as described herein, preferably the recovered carbon black as described herein exhibiting the above-described values of the BET specific surface area, 325 mesh size and 35 mesh size, as a starting material. Thus, the present invention in particular relates to a recycle loop for a carbon black material comprised in a rubber material which in turn is comprised in a tire carcass.

Further, the present invention relates to a method for recycling an end-of-life tire, the process comprises
(A) separating a tread section material M_{S} and recovered carbon black from an end-of-life tire according to a process as described herein, preferably according to a process comprising
   (1) providing the end-of-life tire;
   (2) subjecting the end-of-life tire to a tread section removal method, obtaining a removed tread section material M_{S} and a tire carcass material M_{C}, the tire carcass material M_{C} optionally comprising a residual amount of the tread section S;
   (3) subjecting at least a part of the tire carcass material M_{C} to pyrolysis conditions, obtaining a liquid pyrolysis oil fraction F_{P} and a solid recovered carbon black fraction F_{CB}, said subjecting preferably comprising
      (3.1) subjecting the tire carcass material M_{C} to comminution, obtaining a mixture M_{CC} comprising comminuted tire carcass material M_{C} comprising rubber, textile fibers and steel;
      (3.2) subjecting the mixture M_{CC} to a separation method, obtaining a rubber mixture M_{CCR}, a textile fiber mixture M_{CCT} and a steel mixture M_{CCS}, said separation method preferably comprising
         (3.2.1) subjecting the mixture M_{CC} to a first separation step, obtaining the steel mixture M_{CCS} and a rubber and textile fiber mixture M_{CCTR};
         (3.2.2) subjecting the mixture M_{CCTR} to a second separation step, obtaining the rubber mixture M_{CCR} and the textile fiber mixture M_{CCT};
      (3.3) subjecting the mixture M_{CCR} to pyrolysis conditions, obtaining a pyrolysis oil and recovered carbon black;
   (4) subjecting the solid recovered carbon black fraction F_{CB} obtained according to (3) to purification, wherein the purification preferably comprises at least one chemical purification step, said purification preferably comprising
      (4.1) providing at least one alkaline mixture M_{A} comprising one or more of at least one alkali metal hydroxides, ammonia, at least one ammonium salt, at least one amine, and at least one amine salt;
      (4.2) optionally providing a mixture M_{O} comprising at least one oxidant;
      (4.3) contacting the solid recovered carbon black fraction F_{CB} with the mixture M_{A}, said contacting optionally comprising adding the mixture M_{O}, obtaining from said contacting a mixture M_{CB} comprising recovered carbon black;
      (4.4) separating the recovered carbon black from the mixture M_{CB}, obtaining a purified solid recovered carbon black fraction F_{CBP} being depleted, compared to the solid recovered carbon black fraction F_{CB}, in one or more of a mineral and/or a salt, more preferably one or more of a metal sulphide, a metal oxide and a silicate;
         and/or
      (4.1') providing a mixture M_{S} comprising at least one acid;
      (4.2') contacting the solid recovered carbon black fraction F_{CB} with the mixture Mₛ, obtaining a mixture M_{CB} comprising recovered carbon black;
      (4.3') separating the recovered carbon black from the mixture M_{CB}, obtaining a purified solid recovered carbon black fraction F_{CBP} being depleted, compared to the solid recovered carbon black fraction F_{CB}, in one or more of a mineral and/or a salt, preferably one or more of a zinc salt;
(B) preparing at least one rubber material using at least a part of the recovered carbon black obtained according to (A) and at least a part of the tread section material M_{S};
(C) preparing a tire using at least one of the rubber materials prepared according to (B).

Yet further, the present invention relates to a pyrolysis oil, preferably the pyrolysis oil fraction F_{P} obtainable or obtained by step (3), preferably step (3.3) of the process as described herein. Still further according to the present invention, the pyrolysis oil fraction F_{P} can be subjected to one or more post-treatment steps directed to the purification of the pyrolysis oil fraction F_{P}. In this respect, it may be preferred that said purification comprises
- optionally filtrating the liquid pyrolysis oil fraction F_{P};
- subjecting the liquid pyrolysis oil fraction F_{P} or the filtered liquid pyrolysis oil fraction F_{P} to hydrogenation in at least one hydrogenation zone Z₁ containing a heterogeneous hydrogenation catalyst, obtaining a liquid pyrolysis oil P_{H};
- filtrating the liquid pyrolysis oil P_{H};
- subjecting the filtered liquid pyrolysis oil P_{H} to dehalogenation in at least one dehalogenation zone Z₂, obtaining a liquid pyrolysis oil P being depleted, compared to P_{H}, in one or more halogenated organic compounds.

The present invention also relates to the thus purified pyrolysis oil.

According to another aspect, the present invention relates to a process, preferably the process as described herein, said process comprising the step of converting the recovered carbon black obtainable or obtained by the process as described herein and/or the pyrolysis oil obtainable or obtained by the process as described herein, and/or a chemical material obtainable by or obtained by the process as described herein to obtain a product Ω.

Preferably, the product Ω is selected from
- building block or monomer; or
- polymer, preferably polymer A, polymer composition, preferably polymer composition A, or polymer product, preferably polymer product A; or
- cleaning polymer, cleaning surfactant, descaling compound, cleaning biocide or composition or formulation thereof; or
- agrochemical composition, agrochemical formulation auxiliary or agrochemically active ingredient; or
- active pharmaceutical ingredient or intermediate thereof, pharmaceutical excipient, animal feed additive, human food additive, dietary supplements, aroma chemical or aroma composition; or
- aqueous polymer dispersion, preferably polyurethane or polyurethane - poly(meth)acrylate hybrid polymer dispersion, emulsion, binder for paper and fiber coatings, UV-curable acrylic polymer for hot melts and coatings polyisocyanates, hyperbranched polyester polyol, polymeric dispersant for inorganic binder compositions, unsaturated polyester polyol or 100% curable composition; or
- cosmetic surfactant, emollient, wax, cosmetic polymer, UV filter, further cosmetic ingredient or composition or formulation thereof; or
- polymer B, polymer composition B, coating composition, other functional composition, foil, molded body, coating or coated substrate.

Preferably, the content of the recovered carbon black as described herein and/or the pyrolysis oil as described herein and/or the chemical product as described herein in the product Ω is 1 weight-% or more, preferably 2 weight-% or more, more preferably 5 weight-% or more, more preferably 15 weight-% or more, more preferably 30 weight-% or more, more preferably 40 weight-% or more, more preferably 60 weight-% or more, more preferably 80 weight-% or more, more preferably 90 weight-% or more, more preferably 95 weight-% or more; and/or the content of the recovered carbon black as described herein and/or the pyrolysis oil as described herein and/or the chemical product as described herein in the product Ω is 100 weight-% or less, preferably 95 weight-% or less, more preferably 90 weight-% or less, more preferably 50 weight-% or less, more preferably 25 weight-% or less, more preferably 10 weight-% or less; wherein more preferably the content is determined based on identity preservation and/or segregation and/or mass balance and/or book and claim chain of custody models, preferably based on mass balance, preferably the International Sustainability and Carbon Certification (ISCC) standard.

The publication Prior Art Disclosure; Issue 684; paragraphs [1000] to [8005]; ISSN: 2198-4786; published: February 12, 2024 will be regarded as Reference RF1, which is incorporated herein by reference in its entirety. Preferably, the product Ω referred to in the preceding paragraph is a product as described in Reference RF1; paragraphs [1000] to [8005]. Preferably, the process described herein is further a process for the production of a product referred to in the preceding paragraph.

The converting step to obtain the product Ω preferably comprises one or more step(s) as described below and can be performed by conventional methods well known to a person skilled in the art. The converting step preferably comprises one or more step(s) selected from:
recycling, preferably depolymerizing, gasifying, pyrolyzing, and/or steam cracking; and/or purifying, preferably crystallizing, (solvent) extracting, distilling, evaporating, hydrotreating, absorbing, adsorbing and/or subjecting to ion exchanger; and/or
assembling, preferably foaming, synthesizing, chemical conversion, chemically transforming, polymerizing and/or compounding; and/or forming, preferably foaming, extruding and/or molding; and/or finishing, preferably coating and/or smoothing.

In addition, the one or more step(s) are described in detail in Reference RF1; paragraphs [1000] to [8005].

The term "building block", as used in the context of the product Ω herein, comprises com-pounds, which are in a gaseous or liquid state under standard conditions of 0°C and 0.1 MPa. Building blocks are typically used in chemical industry to form secondary products, which provide a higher structural complexity and/or higher molecular weight than the building block on which the secondary product is based. The building block is preferably selected from the group consisting of hydrogen, carbon monoxide, carbon dioxide, ethylene oxide, ethylene glycols, syngas comprising a mixture of hydrogen and carbon monoxide, alkanes, alkenes, alkynes and aromatic com-pounds. The alkanes, alkenes, alkynes and aromatic compounds comprise in particular 1 to 12 carbon atoms, respectively.

The term "monomer", as used in the context of the product Ω herein, comprises molecules, which can react with each other to form polymer chains by polymerization. The monomer is preferably selected from the group consisting of (meth)acrylic acid, salts of (meth)acrylic acid; in particular sodium, potassium and zinc salts; (meth)acrolein and (meth)acrylates. (Meth)acrylates comprising 1 to 22 carbon atoms are preferred, in particular comprising 1 to 8 carbon atoms. The terms (meth)acrylic acid, (meth)acrolein or (meth)acrylate relate to acrylic acid, acrolein or acrylate and also to methacrylic acid, methacrolein or methacrylate, where applicable. Further, the monomer can be selected from hexamethylenediamine (HMD) and adipic acid.

The building block can further be an intermediate compound. The term "intermediate compound", as used in the context of the product Ω herein, comprises organic reagents, which are applied for formation of compounds with higher molecular complexity. The intermediate compound can be selected for example from the group consisting of phosgene, polyisocyanates and propylene oxide. The polyisocyanates are in particular aromatic di- and polyisocyanates, preferably toluene diisocyanate (TDI) and/or diphenylmethane diisocyanate (MDI).

The building block and the monomer and typical converting step(s) to obtain the building block or monomer are described in more detail in paragraphs [1000] to [1012] of Reference RF1.

The term "polymer A", as used in the context of the product Ω herein, comprises thermoplastic, e.g., polyamide or thermoplastic polyurethane, thermoset, e.g., polyurethane, elastomer, e.g., polybutadiene, or a copolymer or a mixture thereof and is defined in more detail in paragraphs [2001] to [2007] of Reference RF1.

The term "polymer composition A", as used in the context of the product Ω herein, comprises all compositions comprising a polymer as described above and one or more additive(s), e.g. reinforcement, colorant, modifier and/or flame retardant, and is defined in more detail in paragraph [2008] of Reference RF1.

The term "polymer product A", as used in the context of the product Ω herein, comprises any product comprising the polymer A and/or polymer composition A as described above and is defined in more detail in paragraphs [2009] and [2010] of Reference RF1.

The step(s) to obtain the polymer, preferably polymer A, polymer composition, preferably polymer composition A or polymer product, preferably polymer product A is/are described in more detail in paragraph [2011] of Reference RF1.

The term "industrial use polymer", as used in the context of the product Ω herein, comprises rhe-ology, polycarboxylate, alkoxylated polyalkylenamine, alkoxylated polyalkylenimine, polyether-based, dye inhibition and soil release cleaning polymers defined in more detail in paragraphs [3035] to [3044] of Reference RF1. The term "industrial use surfactant", as used in the context of the product Ω herein, comprises non-ionic, anionic and amphoteric industrial use surfactants defined in more detail in paragraphs [3008] to [3034] of Reference RF1. The term "industrial use descaling compound", as used in the context of the product Ω herein, comprises non-phosphate based builders (NPB) and phosphonates (CoP) described in more detail in paragraphs [3001] to [3005] of Reference RF1. The term "industrial use biocide", as used herein, refers to a chemical compound that kills microorganisms or inhibits their growth or reproduction defined in more detail in paragraphs [3006] to [3007] of Reference RF1. The term "industrial use solvent", as used in the context of the product Ω herein, comprises alkyl amides, alkyl lactamides, alkyl esters, lactate esters, alkyl diester, cyclic alkyl diester, cyclic carbonates, aromatic aldehydes and aromatic esters defined in more detail in paragraphs [3045] to [3055] of Reference RF1. The term "industrial use dispersant", as used in the context of the product Ω herein, comprises anionic and non-ionic industrial use dispersants defined in more detail in paragraphs [3056] to [3058] of Reference RF1. The term "composition and/or formulation thereof" with reference to the industrial use polymers, industrial use surfactants, descaling compounds and/or industrial use biocides refers to industrial use compositions and/or institutional use products and/or fabric and home care products and/or personal care products defined in more detail in paragraph [3059] of Reference RF1. The converting step(s) to obtain the industrial use polymer, industrial use surfactant, descaling compound and/or industrial use biocide are defined in more detail in paragraph [3060] of Reference RF1. The converting steps to obtain the industrial use composition or formulation of the industrial use polymer, industrial use surfactant, descaling compound and/or industrial use biocide are defined in more detail in paragraph [3061] of Reference RF1.

The term "agrochemical composition", as used in the context of the product Ω herein, typically relates to a composition comprising an agrochemically active ingredient and at least one agrochemical formulation auxiliary. Examples of agrochemical compositions, active ingredients and auxiliaries are described in more detail in Reference RF1, paragraph [4001].

The agrochemical composition may take the form of any customary formulation. The agrochemical compositions are prepared in a known manner, e.g. described by Mollet and Grubemann, Formulation technology, Wiley VCH, Weinheim, 2001; or Knowles, New developments in crop protection product formulation, Agrow Reports DS243, T&F Informa, London, 2005. The converting step(s) to obtain the agrochemically active ingredients and auxiliaries may be conducted in analogy to the production step(s) of their analogues that are based on petrochemicals or other precursors that are not gained by recycling processes. In addition, conversion to compounds mentioned in sections "Polymer" and "Cosmetic surfactant, emollient, wax, cosmetic polymer, UV filter, further cosmetic ingredient or compositions or formulations thereof" may be performed as described in these sections as well as the respective paragraphs in Reference RF1.

The term active pharmaceutical ingredients and/or intermediates thereof, as used in the context of the product Ω herein, comprises substances that provide pharmacological activity or other direct effect in the diagnosis, cure, mitigation, treatment, or prevention of disease, or to affect the structure or any function of the body. Intermediates thereof are isolated products that are generated during a multi-step route of synthesis of an active pharmaceutical ingredient. The term pharmaceutical excipients, as used in the context of the product Ω herein, comprises compounds or compound mixtures used in compositions for various pharmaceutical applications, which are not substantially pharmaceutically active on itself. Active pharmaceutical ingredients and/or intermediates thereof and pharmaceutical excipients are defined in more detail in paragraph [5001] of Reference RF1.

The converting step(s) to obtain the active pharmaceutical ingredients and/or intermediates thereof and pharmaceutical excipients may comprise one or more synthesis steps and can be performed by conventional synthesis and techniques well known to a person skilled in the art.

The terms animal feed additives, human food additives, dietary supplements, as used in the context of the product Ω herein, comprises Vitamins, Pro-Vitamins and active metabolites thereof including intermediates and precursors, especially Vitamin A, B, E, D, K and esters thereof, like acetate, propionate, palmitate esters or alcohols thereof like retinol or salts thereof and any combinations thereof; Tetraterpenes, especially isoprenoids like carotenoids and xanthophylls including their intermediates and precursors as well as mixtures and derivates thereof, especially beta carotene, Canthaxanthin, Citranaxanthin, Astaxanthin, Zeaxanthin, Lutein, Lycopene, Apo-carotenoids, and any combinations thereof; organic acids, especially formic acid, propionic acid and salts thereof, such as sodium, calcium or ammonium salts, and any combinations thereof, such as but not limited to mixtures of formic acid and sodium formiate, propionic acid and ammonium propionate, formic acid and propionic acid, formic acid and sodium formiate and propionic acid, propionic acid and sodium propionate and formic acid and sodium formiate; glycerides of carboxylic acids and short and medium chain fatty acids, conjugated linoleic acids, such as omega-6 fatty acid (C18:2) methyl ester and 1,2-propandiol and beverage stabilizers, such as polyvinylpyrrolidone-polymer or polyvinylimidazole/polyvinylpyrrolidone-copolymer. Animal feed additives, human food additives and dietary supplements are defined in more detail in paragraph [5002] of Reference RF1.

The converting step(s) to obtain the animal feed additives, human food additives, dietary supplements may comprise one or more synthesis steps and can be performed by conventional synthesis and techniques well known to a person skilled in the art.

The terms aroma chemical and aroma composition as used in the context of the product Ω herein, comprise a volatile organic substance with a molecular weight between 70-250 g/mol comprising a functional group with a carbon skeleton of C5-C16 carbon atoms comprising linear, branched, cyclic, for example with a ring size of C5-C18, bicyclic or tricyclic aliphatic chains and but not necessarily one or more unsaturated structural elements like double bonds, triple bonds, aromatics or heteroaromatics and preferably the one or more additional functional groups are selected from alcohol, ether, ester, ketone, aldehyde, acetal, carboxylic acid, nitrile, thiol, amine. In one aspect, the aroma chemical is a terpene-based aroma chemical, for example selected from monoterpenes and monoterpenoids, sesquiterpenes and sesquiterpenoids, diterpenes, triterpenes or tetraterpenes. Aroma chemicals can be combined with further aroma chemicals to give an aroma composition. Aroma chemicals and aroma compositions are defined in more detail in paragraph [5003] of Reference RF1.

The converting step(s) to obtain the aroma chemical and aroma composition may comprise one or more synthesis steps and can be performed by conventional synthesis and techniques well known to a person skilled in the art.

The term "aqueous polymer dispersion", as used in the context of the product Ω herein, comprises aqueous composition(s) comprising dispersed polymer(s) and is defined in more detail in the section [6001] entitled "aqueous polymer dispersion" of Reference RF1. The dispersed polymer(s) may be selected from acrylic emulsion polymer(s), styrene acrylic emulsion polymer(s), styrene butadiene dispersion(s), aqueous dispersion(s) comprising composite particles, acrylate alkyd hybrid dispersion(s), polyurethane(s) (including UV-curable polyurethanes) and polyurethane - poly(meth)acrylate hybrid polymer(s). The term "emulsion polymer", as used herein, comprises polymer(s) made by free-radical emulsion polymerization. Aqueous polyurethane dispersion(s) are defined in more detail in the section [6002] entitled "Polyurethane dispersions" of Reference RF1. UV-curable polyurethane(s) is/are defined in more detail in the section [6017] of Reference RF1. Polyurethane - poly(meth)acrylate hybrid polymer(s) is/are defined in more detail in the section [6016] of Reference RF1.

The term "polymeric dispersant", as used in the context of the product Ω herein, comprises preferably polymer(s) comprising polyether side chain, in particular polycarboxylate ether polymer(s) and polycondensation product(s) defined in more detail in paragraph [6020] entitled "Polymeric dispersant" of Reference RF1.

The converting (polymerization) step(s) to obtain the aqueous polymer dispersion(s) comprising emulsion polymer(s) is/are defined in more detail in the section [6003] entitled "Emulsion polymerization" of Reference RF1.

The converting (polymerization) step(s) to obtain the aqueous polyurethane dispersion(s) is/are defined in more detail in the section [6014] entitled "Process for the preparation of aqueous poly-urethane dispersions" and section [6017)] entitled "Aqueous UV-curable polyurethane dispersions, their preparation and use and compositions containing them" of Reference RF1. Composition(s) and uses of aqueous polymer dispersion(s) and of polymeric dispersant(s) are defined in more detail in the following sections of Reference RF1:
section [6004] entitled "Uses of aqueous polymer dispersions",
section [6005] entitled "Binders for architectural and construction coatings"
section [6006] entitled "Binders for paper coating"
section [6007] entitled "Binders for fiber bonding"
section [6008] entitled "Adhesive polymers and adhesive compositions"
section [6015] entitled "Aqueous polyurethane dispersions suitable for use in coating compositions"
section [6016] entitled "Aqueous polyurethane - poly(meth)acrylate hybride polymer dispersions suitable for use in coating compositions"
section [6017] entitled "Aqueous UV-curable polyurethane dispersions, their preparation and use and compositions containing them"
section [6018] entitled "Inorganic binder compositions comprising polymeric dispersants and their use" [6019] 100% curable coating compositions

UV-crosslinkable poly(meth)acrylate(s) and its/their uses are defined in more detail in section [6009] entitled "UV-crosslinkable poly(meth)acrylates for use in UV-curable solvent-free hot melt adhesives and their use for making pressure-sensitive self-adhesive articles" of Reference RF1.

Polyisocyanate(s), composition(s) comprising them and their uses are defined in more detail in section [6010] entitled "Polyisocyanates" of Reference RF1.

Hyperbranched polyester polyol(s) and its/their uses are defined in more detail in section [6011] entitled "Organic solvent based hyperbranched polyester polyols suitable for use in coating compositions" of Reference RF1. The converting step(s) to obtain the hyperbranched polyester polyols is/are defined in more detail in the section [6012] entitled "Preparation of organic solvent based hyperbranched polyester polyols" of Reference RF1. Coating composition(s) comprising hyperbranched polyester polyol(s), polyisocyanate(s) and additive(s) and substrate(s) coated therewith are defined in more detail in section [6013] entitled "Organic solvent based two component coating compositions comprising hyperbranched polyester polyols and polyisocyanates" of Reference RF1.

Unsaturated polyester polyol(s), solvent-based coating composition(s) comprising said unsaturated polyester polyol(s) and substrate(s) for coating with said coating composition(s) are defined in more detail in section [6018] entitled "Organic solvent based coating composition comprising unsaturated polyester polyols" of Reference RF1.

100% curable coating composition(s) is/are defined in more detail in section [6019] of Reference RF1.

Polymeric dispersant(s) for inorganic binder compositions is/are defined in more detail in section [6020] of Reference RF1. The inorganic binder composition(s) comprising the polymeric dispersants and their use are defined in more detail in section [6021] of Reference RF1. The converting step(s) to obtain the polymeric dispersant(s) are defined in more detail in section [6020] of Reference RF1. The term "inorganic binder composition" comprising the polymeric dispersant(s), as used herein, comprises preferably in particular hydraulically setting compositions and compositions comprising calcium sulfate and is defined in more detail in section [6021] of Reference RF1 entitled "Inorganic binder compositions comprising the polymeric dispersant and their use". Specific building material formulation(s) comprising polymeric dispersant(s) or building product(s) produced by a building material formulation comprising a polymeric dispersant are disclosed in more detail in section [6021] of Reference RF1.

The term "cosmetic surfactant", as used in the context of the product Ω herein, comprises non-ionic, anionic, cationic and amphoteric surfactants and is defined in more detail in paragraph [7002] of Reference RF1. The term "emollient", as used in the context of the product Ω herein, refers to a chemical compound used for protecting, moisturizing, and/or lubricating the skin and is defined in more detail in paragraph [7003] of Reference RF1. The term "wax", as used in the context of the product Ω herein, comprises pearlizers and opacifiers and is defined in more detail in paragraph [7004] of Reference RF1. The term "cosmetic polymer", as used in the context of the product Ω herein, comprises any polymer that can be used as an ingredient in a cosmetic formulation and is defined in more detail in paragraph [7005] of Reference RF1. The term "UV filter", as used in the context of the product Ω herein, refers to a chemical compound that blocks or absorbs ultraviolet light and is defined in more detail in paragraph [7006] of Reference RF1. The term "further cosmetic ingredient", as used in the context of the product Ω herein, comprises any ingredient suitable for making a cosmetic formulation. Several sources disclose cosmetically acceptable ingredients. E. g. the database Cosing on the internet pages of the European Commission discloses cosmetic ingredients and the International Cosmetic Ingredient Dictionary and Handbook, edited by the Personal Care Products Council (PCPC), discloses cosmetic ingredients. The term "composition and/or formulation thereof" with reference to the cosmetic surfactant, emollient, wax, cosmetic polymer, UV filter and/or further cosmetic ingredient refers to personal care and/or cosmetic compositions or formulations defined in more detail in paragraph [7007] of Reference RF1. The converting step(s) to obtain the cosmetic surfactant, emollient, wax, cosmetic polymer, UV filter or further cosmetic ingredient is/are defined in more detail in paragraph [7008] of Reference RF1.

The terms "polymer B", "polymer composition B", "coating composition", "other functional composition", "foil", "molded body", "coating" and "coated substrate" are well known to the person skilled in the art and are defined in more detail from paragraph [8000] to [8005] of Reference RF1.

The present invention is further illustrated by the following set of embodiments and combinations of embodiments resulting from the dependencies and back-references as indicated. In particular, it is noted that in each instance where a range of embodiments is mentioned, for examples in the context of a term such as "The process of any one of embodiments 1 to 3", every embodiment in this range is meant to be explicitly disclosed for the skilled person, i.e. the wording of this term is to be understood by the skilled person as being synonymous to "The process of any one of embodiments 1, 2 and 3". Further, it is explicitly noted that the following set of embodiments represents a suitably structured part of the general description directed to preferred aspects of the present invention, and, thus, suitably supports, but does not represent the claims of the present invention.
1. A process for working up an end-of-life tire, wherein the end-of-life tire comprises a tread section S mounted on a tire carcass C, wherein the tread section S comprises a rubber material R₁ comprising carbon black and the tire carcass C comprises at least one rubber material R₂ comprising carbon black, the process comprising
   (1) providing the end-of-life tire;
   (2) subjecting the end-of-life tire to a tread section removal method, obtaining a removed tread section material M_{S} and a tire carcass material M_{C}, the tire carcass material M_{C} optionally comprising a residual amount of the tread section S;
   (3) subjecting at least a part of the tire carcass material M_{C} to pyrolysis conditions, obtaining a liquid pyrolysis oil fraction F_{P} and a solid recovered carbon black fraction F_{CB}.
2. The process of embodiment 1, wherein the tread section removal method according to (2) comprises one or more of cutting and buffing, preferably buffing.
3. The process of embodiment 1 or 2, wherein the weight ratio of the tread section material M_{S} obtained according to (2) relative to the weight of the tread section S is in the range of from 0.8:1 to 1:1, preferably in the range of from 0.9:1 to 1:1, more preferably in the range of from 0.95:1 to 1:1.
4. The process of any one of embodiments 1 to 3, wherein from 95 to 100 weight-%, preferably from 98 to 100 weight-%, more preferably from 99 to 100 weight-% of the tread section S consist of the rubber material R₁.
5. The process of any one of embodiments 1 to 4, wherein the rubber material R₁ comprises silica and the tire carcass C optionally comprises silica, wherein the weight ratio of Si comprised in the tire carcass material M_{C}, calculated as SiO₂, relative to Si comprised in the tread section material M_{S}, calculated as SiO₂, is in the range of from 0:1 to 0.1:1, preferably in the range of from 0:1 to 0.05:1, more preferably in the range of from 0:1 to 0.01:1.
6. The process of any one of embodiments 1 to 5, wherein the tire carcass material M_{C} comprises the at least one rubber material R₂, textile fibers and steel, and wherein subjecting at least a part of the tire carcass material M_{C} to pyrolysis conditions according to (3) comprises
   (3.1) subjecting the tire carcass material M_{C} to comminution, obtaining a mixture M_{CC} comprising comminuted tire carcass material M_{C} comprising rubber, textile fibers and steel;
   (3.2) subjecting the mixture M_{CC} to a separation method, obtaining a rubber mixture M_{CCR}, a textile fiber mixture M_{CCT} and a steel mixture M_{CCS};
   (3.3) subjecting the mixture M_{CCR} to pyrolysis conditions, obtaining a pyrolysis oil and recovered carbon black.
7. The process of embodiment 6, wherein comminution according to (3.1) comprises one or more of cutting and shredding, preferably shredding.
8. The process of embodiment 6 or 7, wherein the separation method according to (3.2) comprises
   (3.2.1) subjecting the mixture M_{CC} to a first separation step, obtaining the steel mixture M_{CCS} and a rubber and textile fiber mixture M_{CCTR};
   (3.2.2) subjecting the mixture M_{CCTR} to a second separation step, obtaining the rubber mixture M_{CCR} and the textile fiber mixture M_{CCT}.
9. The process of embodiment 8, wherein the first separation step according to (3.2.1) comprises one or more steps of shredding and magnetic separation.
10. The process of embodiment 8 or 9, wherein the second separation step according to (3.2.2) comprises one or more of shredding and sieving, preferably sieving.
11. The process of any one of embodiments 6 to 10, wherein from 90 to 100 weight-%, preferably from 95 to 100 weight-%, more preferably from 98 to 100 weight-% of the rubber mixture M_{CCR} consist of rubber.
12. The process of any one of embodiments 6 to 11, wherein the silica content of the rubber mixture M_{CCR} is in the range of from 0 to 25 weight-%, preferably in the range of from 0 to 15 weight-%, more preferably, in the range of from 0 to 8 weight-%, calculated as SiO₂ and based on the total weight of the mixture M_{CCR}.
13. The process of any one of embodiments 1 to 12, wherein the pyrolysis conditions according to (3) comprise a pyrolysis temperature T_{P} in the range of from 300 to 900 °C, preferably in the range of from 350 to 800°C, more preferably in the range of from 400 to 700 °C.
14. The process of any one of embodiments 1 to 13, wherein the pyrolysis conditions according to (3) comprise a pyrolysis pressure p_{P} in the range of from 0.1 to 5 bar, preferably in the range of from 0.2 to 4 bar, more preferably in the range of from 0.5 to 3 bar.
15. The process of any one of embodiments 1 to 14, wherein the pyrolysis conditions according to (3) comprise an inert pyrolysis gas atmosphere, preferably at the beginning of the pyrolysis, wherein preferably from 99.5 to 100 volume-%, more preferably from 99.8 to 100 volume-%, more preferably from 99.9 to 100 volume-% of said inert pyrolysis gas atmosphere consist of one or more of nitrogen and argon, preferably nitrogen.
16. The process of embodiment 15, wherein the inert pyrolysis gas atmosphere comprises from 0 to 0.5 volume-%, preferably from 0 to 0.2 volume-%, more preferably from 0 to 0.1 volume-% oxygen.
17. The process of any one of embodiments 1 to 16, wherein the end-of-life tire provided according to (1) is at least one of a car tire, a motorcycle tire, a bicycle tire, a truck tire, a bus tire, a tractor tire, a mining machine tire and an aircraft tire, wherein the end-of-life tire is preferably a passenger car tire.
18. The process of any one of embodiments 1 to 17, wherein the process further comprises (4) subjecting the solid recovered carbon black fraction F_{CB} obtained according to (3) to purification, preferably wherein the purification comprises at least one chemical purification step.
19. The process of embodiment 18, wherein the at least one chemical purification step comprises
   (4.1) providing at least one alkaline mixture M_{A} comprising one or more of at least one alkali metal hydroxides, ammonia, at least one ammonium salt, at least one amine, and at least one amine salt;
   (4.2) optionally providing a mixture M_{O} comprising at least one oxidant;
   (4.3) contacting the solid recovered carbon black fraction F_{CB} with the mixture M_{A}, said contacting optionally comprising adding the mixture M_{O}, obtaining from said contacting a mixture M_{CB} comprising recovered carbon black;
   (4.4) separating the recovered carbon black from the mixture M_{CB}, obtaining a purified solid recovered carbon black fraction F_{CBP} being depleted, compared to the solid recovered carbon black fraction F_{CB}, in one or more of a mineral and/or a salt, more preferably one or more of a metal sulphide, a metal oxide and a silicate.
20. The process of embodiment 19, wherein the at least one alkali metal hydroxide comprises at least one of LiOH, NaOH and KOH, preferably at least one of NaOH and KOH.
21. The process of embodiment 19 or 20, wherein the at least one ammonium salt comprises at least one of ammonium hydroxide, ammonium bromide, and ammonium chloride.
22. The process of any one of embodiments 19 to 21, wherein during contacting according to (4.3) the temperature T_{CP} is in the range of from 25 to 300 °C, preferably in the range of from 80 to 240 °C.
23. The process of any one of embodiments 19 to 22, wherein contacting according to (4.3) is carried out at a pressure p_{CP} in the range of from 0.01 to 200 bar, preferably in the range of from 1 to 100 bar, more preferably in the range of from 5 to 50 bar.
24. The process of embodiment 18, wherein the at least one chemical purification step comprises
   (4.1') providing a mixture M_{S} comprising at least one acid;
   (4.2') contacting the solid recovered carbon black fraction F_{CB} with the mixture Mₛ, obtaining a mixture M_{CB} comprising recovered carbon black;
   (4.3') separating the recovered carbon black from the mixture M_{CB}, obtaining a purified solid recovered carbon black fraction F_{CBP} being depleted, compared to the solid recovered carbon black fraction F_{CB}, in one or more of a mineral and/or a salt, preferably one or more of a zinc salt.
25. The process of embodiment 24, wherein the at least one acid is one or more of hydrochloric acid, sulphuric acid, phosphoric acid, nitric acid, boric acid, perchloric acid, acetic acid, citric acid, and formic acid.
26. The process of any one of embodiments 1 to 25, wherein the process further comprises pelletizing the solid recovered carbon black fraction F_{CB} obtained according to (3) and/or the purified solid recovered carbon black fraction F_{CBP} obtained according to (4.4) or (4.3').
27. The process of embodiment 26, wherein said pelletizing comprises
   - subjecting the solid recovered carbon black fraction F_{CB} and/or the purified solid recovered carbon black fraction F_{CBP} to comminution, obtaining a mixture M_{CCB} comprising comminuted recovered carbon black;
   - mixing the mixture M_{CCB} with a binder, obtaining a mixture M_{CCBB} comprising comminuted recovered carbon black and a binder;
   - pelletizing the mixture M_{CCBB}, obtaining pellets comprising recovered carbon black and a binder.
28. The process of embodiment 27, wherein the binder is one or more of polyvinyl alcohol, carboxymethyl cellulose, wax-based binders, paraffin-based binders, phenol resin and epoxy resin.
29. The process of embodiment 27 or 28, wherein comminution according to (i) comprises milling, preferably one or more of ball milling and jet milling, more preferably jet milling.
30. Recovered carbon black, obtainable or obtained by a process according to any one of embodiments 1 to 29.
31. Recovered carbon black of embodiment 30, exhibiting a BET specific surface area in the range of from 20 to 80 m²/g, preferably in the range of from 50 to 75 m²/g, more preferably in the range of from 55 to 75 m²/g, more preferably in the range of from 55 to 70 m²/g, wherein the BET specific surface area is determined as described in Reference Example 1.
32. Recovered carbon black of embodiment 30 or 31, characterized by a 325 mesh residue is in the range of from 150 to 450 ppm, preferably in the range of from 200 to 400 ppm, more preferably in the range of from 250 to 350 ppm, wherein the 325 mesh residue is determined as described in Reference Example 2.
33. Recovered carbon black of any one of embodiments 30 to 32, characterized by a 35 mesh residue is in the range of from 0.1 to 30 ppm, preferably in the range of from 1 to 20 ppm, more preferably in the range of from 5 to 15 ppm, wherein the 35 mesh residue is determined as described in Reference Example 2.
34. Use of recovered carbon black according to any one of embodiments 30 to 33 for preparing a rubber material, preferably a rubber material for use as a component of a tire.
35. A method for preparing a rubber material, preferably as a component of a tire, the method comprising using recovered carbon black according to any one of embodiments 30 to 33 as a starting material.
36. A process for recycling an end-of-life tire, comprising
   (A) separating a tread section material M_{S} and recovered carbon black from an end-of-life tire according to a process according to any one of embodiments 1 to 25;
   (B) preparing at least one rubber material using at least a part of the recovered carbon black obtained according to (A) and at least a part of the tread section material M_{S};
   (C) preparing a tire using at least one of the rubber materials prepared according to (B).
37. A pyrolysis oil, obtainable or obtained by a process according to any one of embodiments 1 to 29.
38. A process, preferably the process according to any one of embodiments 1 to 29, comprising the step of converting the recovered carbon black obtainable or obtained by the process according to any one of embodiments 1 to 29 and/or the pyrolysis oil obtainable or obtained by the process according to any one of embodiments 1 to 29, or a chemical material obtainable by or obtained by the process according to any one of embodiments 1 to 29 to obtain a product Ω.
39. The process of embodiment 38, wherein the product Ω is selected from
   - building block or monomer; or
   - polymer, preferably polymer A, polymer composition, preferably polymer composition A, or polymer product, preferably polymer product A; or
   - cleaning polymer, cleaning surfactant, descaling compound, cleaning biocide or composition or formulation thereof; or
   - agrochemical composition, agrochemical formulation auxiliary or agrochemically active ingredient; or
   - active pharmaceutical ingredient or intermediate thereof, pharmaceutical excipient, animal feed additive, human food additive, dietary supplements, aroma chemical or aroma composition; or
   - aqueous polymer dispersion, preferably polyurethane or polyurethane - poly(meth)acrylate hybrid polymer dispersion, emulsion, binder for paper and fiber coatings, UV-curable acrylic polymer for hot melts and coatings polyisocyanates, hyperbranched polyester polyol, polymeric dispersant for inorganic binder compositions, unsaturated polyester polyol or 100% curable composition; or
   - cosmetic surfactant, emollient, wax, cosmetic polymer, UV filter, further cosmetic ingredient or composition or formulation thereof; or
   - polymer B, polymer composition B, coating composition, other functional composition, foil, molded body, coating or coated substrate.
40. The process of embodiment 38 or 39, wherein the content of the recovered carbon black obtainable or obtained by the process according to any one of embodiments 1 to 29 and/or the pyrolysis oil obtainable or obtained by the process according to any one of embodiments 1 to 29 and/or the chemical material according to any one of embodiments 1 to 29 in the product Ω is 1 weight-% or more, preferably 2 weight-% or more, more preferably 5 weight-% or more, more preferably 15 weight-% or more, more preferably 30 weight-% or more, more preferably 40 weight-% or more, more preferably 60 weight-% or more, more preferably 80 weight-% or more, more preferably 90 weight-% or more, more preferably 95 weight-% or more; and/or
   wherein the content of the recovered carbon black obtainable or obtained by the process according to any one of embodiments 1 to 29 and/or the pyrolysis oil obtainable or obtained by the process according to any one of embodiments 1 to 29 and/or the chemical material according to any one of embodiments 1 to 29 in the product Ω is 100 weight-% or less, preferably 95 weight-% or less, more preferably 90 weight-% or less, more preferably 50 weight-% or less, more preferably 25 weight-% or less, more preferably 10 weight-% or less; and
   preferably wherein the content is determined based on identity preservation and/or segregation and/or mass balance and/or book and claim chain of custody models, preferably based on mass balance, preferably the International Sustainability and Carbon Certification (ISCC) standard.

It is explicitly noted that the above set of embodiments represents a suitably structured part of the general description directed to preferred aspects of the present invention, and, thus, suitably supports, but does not represent the claims of the present invention.

In the context of the present invention, a term "X is one or more of A, B and C", wherein X is a given feature and each of A, B and C stands for specific realization of said feature, is to be understood as disclosing that X is either A, or B, or C, or A and B, or A and C, or B and C, or A and B and C. In this regard, it is noted that the skilled person is capable of transfer to above abstract term to a concrete example, e.g. where X is a chemical element A, B and C are concrete elements such as Li, Na, and K, or X is a temperature and A, B and C are concrete temperatures such as 10 °C, 20 °C, and 30 °C. In this regard, it is further noted that the skilled person is capable of extending the above term to less specific realizations of said feature, e.g. "X is one or more of A and B" disclosing that X is either A, or B, or A and B, or to more specific realizations of said feature, e.g. "X is one or more of A, B, C and D", disclosing that X is either A, or B, or C, or D, or A and B, or A and C, or A and D, or B and C, or B and D, or C and D, or A and B and C, or A and B and D, or B and C and D, or A and B and C and D.

### Experimental section

### Reference Example 1: Determination of the BET specific surface area

The specific surface area was determined using the BET method according to ASTM D6556-21.

### Reference Example 2: Determination of the 325 and 35 mesh residues

The 325 and 35 mesh residues were determined using the method according to ASTM D1514.

## Claims

1. A process for working up an end-of-life tire, wherein the end-of-life tire comprises a tread section S mounted on a tire carcass C, wherein the tread section S comprises a rubber material R₁ comprising carbon black and the tire carcass C comprises at least one rubber material R₂ comprising carbon black, the process comprising
(1) providing the end-of-life tire;
(2) subjecting the end-of-life tire to a tread section removal method, obtaining a removed tread section material M_{S} and a tire carcass material M_{C}, the tire carcass material M_{C} optionally comprising a residual amount of the tread section S;
(3) subjecting at least a part of the tire carcass material M_{C} to pyrolysis conditions, obtaining a liquid pyrolysis oil fraction F_{P} and a solid recovered carbon black fraction F_{CB}.

2. The process of claim 1, wherein the tread section removal method according to (2) comprises one or more of cutting and buffing, preferably buffing.

3. The process of claim 1 or 2, wherein the weight ratio of the tread section material M_{S} obtained according to (2) relative to the weight of the tread section S is in the range of from 0.8:1 to 1:1, preferably in the range of from 0.9:1 to 1:1, more preferably in the range of from 0.95:1 to 1:1.

4. The process of any one of claims 1 to 3, wherein from 95 to 100 weight-%, preferably from 98 to 100 weight-%, more preferably from 99 to 100 weight-% of the tread section S consist of the rubber material R₁, wherein the rubber material R₁ comprises silica and the tire carcass C optionally comprises silica, wherein the weight ratio of Si comprised in the tire carcass material M_{C}, calculated as SiO₂, relative to Si comprised in the tread section material M_{S}, calculated as SiO₂, is preferably in the range of from 0:1 to 0.1:1, more preferably in the range of from 0:1 to 0.05:1, more preferably in the range of from 0:1 to 0.01:1.

5. The process of any one of claims 1 to 4, wherein the tire carcass material M_{C} comprises the at least one rubber material R₂, textile fibers and steel, and wherein subjecting at least a part of the tire carcass material M_{C} to pyrolysis conditions according to (3) comprises
(3.1) subjecting the tire carcass material M_{C} to comminution, obtaining a mixture M_{CC} comprising comminuted tire carcass material M_{C} comprising rubber, textile fibers and steel;
(3.2) subjecting the mixture M_{CC} to a separation method, obtaining a rubber mixture M_{CCR}, a textile fiber mixture M_{CCT} and a steel mixture M_{CCS};
(3.3) subjecting the mixture M_{CCR} to pyrolysis conditions, obtaining a pyrolysis oil and recovered carbon black.

6. The process of claim 5, wherein the separation method according to (3.2) comprises
(3.2.1) subjecting the mixture M_{CC} to a first separation step, obtaining the steel mixture M_{CCS} and a rubber and textile fiber mixture M_{CCTR};
(3.2.2) subjecting the mixture M_{CCTR} to a second separation step, obtaining the rubber mixture M_{CCR} and the textile fiber mixture M_{CCT}.

7. The process of claim 5 or 6, wherein from 90 to 100 weight-%, preferably from 95 to 100 weight-%, more preferably from 98 to 100 weight-% of the rubber mixture M_{CCR} consist of rubber, and wherein the silica content of the rubber mixture M_{CCR} is in the range of from 0 to 25 weight-%, preferably in the range of from 0 to 15 weight-%, more preferably, in the range of from 0 to 8 weight-%, calculated as SiO₂ and based on the total weight of the mixture M_{CCR}.

8. The process of any one of claims 1 to 7, wherein the pyrolysis conditions according to (3) comprise
- a pyrolysis temperature T_{P} in the range of from 300 to 900 °C, preferably in the range of from 350 to 800°C, more preferably in the range of from 400 to 700 °C;
- a pyrolysis pressure p_{P} in the range of from 0.1 to 5 bar, preferably in the range of from 0.2 to 4 bar, more preferably in the range of from 0.5 to 3 bar;
- an inert pyrolysis gas atmosphere, preferably at the beginning of the pyrolysis, wherein preferably from 99.5 to 100 volume-%, more preferably from 99.8 to 100 volume-%, more preferably from 99.9 to 100 volume-% of said inert pyrolysis gas atmosphere consist of one or more of nitrogen and argon, preferably nitrogen.

9. The process of any one of claims 1 to 8, wherein the end-of-life tire provided according to (1) is at least one of a car tire, a motorcycle tire, a bicycle tire, a truck tire, a bus tire, a tractor tire, a mining machine tire and an aircraft tire, wherein the end-of-life tire is preferably a passenger car tire.

10. The process of any one of claims 1 to 9, wherein the process further comprises
(4) subjecting the solid recovered carbon black fraction F_{CB} obtained according to (3) to purification, preferably wherein the purification comprises at least one chemical purification step, wherein the at least one chemical purification step preferably comprises
(4.1) providing at least one alkaline mixture M_{A} comprising one or more of at least one alkali metal hydroxides, ammonia, at least one ammonium salt, at least one amine, and at least one amine salt;
(4.2) optionally providing a mixture M_{O} comprising at least one oxidant;
(4.3) contacting the solid recovered carbon black fraction F_{CB} with the mixture M_{A}, said contacting optionally comprising adding the mixture M_{O}, obtaining from said contacting a mixture M_{CB} comprising recovered carbon black;
(4.4) separating the recovered carbon black from the mixture M_{CB}, obtaining a purified solid recovered carbon black fraction F_{CBP} being depleted, compared to the solid recovered carbon black fraction F_{CB}, in one or more of a mineral and/or a salt, more preferably one or more of a metal sulphide, a metal oxide and a silicate;
and/or
(4.1') providing a mixture M_{S} comprising at least one acid;
(4.2') contacting the solid recovered carbon black fraction F_{CB} with the mixture Mₛ, obtaining a mixture M_{CB} comprising recovered carbon black;
(4.3') separating the recovered carbon black from the mixture M_{CB}, obtaining a purified solid recovered carbon black fraction F_{CBP} being depleted, compared to the solid recovered carbon black fraction F_{CB}, in one or more of a mineral and/or a salt, preferably one or more of a zinc salt.

11. The process of any one of claims 1 to 10, wherein the process further comprises pelletizing the solid recovered carbon black fraction F_{CB} obtained according to (3) and/or the purified solid recovered carbon black fraction F_{CBP} obtained according to (4.4) or (4.3'), wherein pelletizing according to (i) preferably comprises
- subjecting the solid recovered carbon black fraction F_{CB} and/or the purified solid recovered carbon black fraction F_{CBP} to comminution, obtaining a mixture M_{CCB} comprising comminuted recovered carbon black;
- mixing the mixture M_{CCB} with a binder, obtaining a mixture M_{CCBB} comprising comminuted recovered carbon black and a binder;
- pelletizing the mixture M_{CCBB}, obtaining pellets comprising recovered carbon black and a binder.

12. Recovered carbon black, obtainable or obtained by a process according to any one of claims 1 to 11, the recovered carbon black preferably exhibiting
- a BET specific surface area in the range of from 20 to 80 m²/g, preferably in the range of from 50 to 75 m²/g, more preferably in the range of from 55 to 75 m²/g, more preferably in the range of from 55 to 70 m²/g;
- a 325 mesh residue is in the range of from 150 to 450 ppm, preferably in the range of from 200 to 400 ppm, more preferably in the range of from 250 to 350 ppm;
- a 35 mesh residue is in the range of from 0.1 to 30 ppm, preferably in the range of from 1 to 20 ppm, more preferably in the range of from 5 to 15 ppm.

13. Use of the recovered carbon black according to claim 12 for preparing a rubber material, preferably a rubber material for use as a component of a tire.

14. A process for recycling an end-of-life tire, comprising
(A) separating a tread section material M_{S} and recovered carbon black from an end-of-life tire according to a process according to any one of claims 1 to 11;
(B) preparing at least one rubber material using at least a part of the recovered carbon black obtained according to (A) and at least a part of the tread section material M_{S};
(C) preparing a tire using at least one of the rubber materials prepared according to (B).

15. A process comprising the step of converting the recovered carbon black obtainable or obtained by the process according to any one of claims 1 to 11 and/or the pyrolysis oil obtainable or obtained by the process according to any one of claims 1 to 11, or a chemical material obtainable by or obtained by the process according to any one of claims 1 to 11 to obtain a product Ω.
